# EUROPEAN PATENT APPLICATION

(11) **EP 3 954 891 A1**
(43) Date of publication of application: **16.02.2022**
(21) Application number: 20788630.0
(22) Date of filing: 30.03.2020
(51) Int. Cl.: F03B 3/18, F03B 3/12, F03B 3/02

(54) **IMPELLER ASSEMBLY FOR HYDROELECTRIC POWER GENERATION DEVICE**

(30) Priority: 12.04.2019 KR 20190042979
(71) Applicant: Park, Hang-Je, Gyeongsangnam-do 52155 (KR)
(72) Inventor: Park, Hang-Je, Gyeongsangnam-do 52155 (KR)
(74) Representative: Hübner, Gerd
(86) International application number: PCT/KR2020/004302
(87) International publication number: WO 2020/209537

(57) **Abstract**

The purpose of the present invention is to provide an impeller assembly for a hydroelectric power generation device, wherein the configuration of a water inlet and the configuration of an impeller are actively improved such that the potential energy of water and the pressure of the flow rate thereof are simultaneously provided to the impeller so as to rotate same in a high-efficiency state and to provide a strong output, thereby maximizing the output efficiency. Particularly, the present invention relates to an impeller assembly for a hydroelectric power generator, wherein an impeller is contained in a cylindrical body having a containing space formed therein and sealed by a cover member, a drive shaft is supported by a bearing coupled to the cover member, and the body has an inlet and an outlet formed therein such that the impeller installed in the inner space is driven. The inlet is configured to be able to supply a fluid, as if an involute curve, from the 12 o'clock direction of the body to the 4 o'clock direction thereof. The outlet is formed from the 6 o'clock direction to the 8 o'clock direction. The impeller has multiple fluid tanks formed to be open toward the inner surface of the body. A pressing portion is formed from the 4 o'clock direction to the 6 o'clock direction between the inlet and the outlet so as to close the fluid tanks, thereby increasing the rotational moment of the impeller.

## Description

### [Technical Field]

The present invention relates to an impeller assembly for a hydroelectric power generation device, and more specifically, to an impeller assembly for a hydroelectric power generation device wherein the configuration of a water inlet and the configuration of an impeller are actively improved such that the head-drop energy of water and the pressure of the flow rate thereof are simultaneously provided to the impeller so as to rotate the impeller in a high-efficiency state and to provide a strong output, thereby maximizing the output efficiency.

### [Background Art]

In the case of hydroelectric power generation devices that can provide the head-drop energy of water as rotational power, it is widely used as clean energy without pollution, and power generation devices having various configurations are provided.

As a representative example, a hydroelectric power generation device is disclosed in Korean Registered Patent Publication (B1) No. 10-0837671 (June 13, 2008) which has a configuration including a caterpillar fixed to a structure installed on water, transfer vehicles installed on the caterpillar, a connector connecting transfer vehicles adjacent to each other, a water receiving plate installed on each transfer vehicle, and a generator operated by the driving force of the transfer vehicle, wherein the water receiving plate has an inclined surface facing toward the center, a through hole is formed in the central part of the water receiving plate, and the water receiving plate has an extension portion at one inclined surface of the through hole formed in the central part of the water receiving plate such that the extension portion can guide the direction of water.

Another example of a power generation system is disclosed in Korean Registered Patent Publication (B1) No. 10-0534546 (December 8, 2005), which includes a buoy installed on the surface of water, and a fixing device for restricting movement of the buoy and a power generator, in which the power generator includes a rail of a caterpillar, a plurality of pulleys moving along the rail, a connector connecting the plurality of pulleys to each other, wings installed on each of the pulleys to absorb the flow energy of water in order to move the pulleys, and an electric generator that generates electricity by receiving the kinetic energy of the pulleys through a power transmission device, wherein the wing is formed by installing a water receiving plate inside a rim wall, a guide bar is installed inside the rim wall, the water receiving plate is installed through the guide bar, and projections formed on both sides of the guide bar.

In the case of the conventional hydroelectric power generation device configured as described above, it is difficult to generate a strong output because the hydroelectric power generation device is installed on the surface of water so that the water pressure is concentrated onto the water receiving plate installed at a front.

Accordingly, in order to solve the above problems, the present inventor has proposed a hydroelectric power generation device disclosed in Korean Registered Patent Publication (B1) No. 10-1465724 (December 10, 2014).

The conventional hydroelectric power generation device includes: a supporter making contact with the ground; a support body erected on the upper side of the supporter in a vertical direction so as to be spaced apart from the ground; an upper shaft and a lower shaft provided to the upper and lower ends of the support so as to be axially supported by a bearing; a power generator provided to the support body so as to be coupled to the upper shaft and a gear box by an intermediary; an upper sprocket and a lower sprocket provided to the upper shaft and the lower shaft, respectively, and a chain coupled to the upper sprocket and the lower sprocket; a cover member coupled to form an operation space in front of the support body and formed in a U-shape; an attachment coupled to a chain pin at a predetermined interval so as to rotate; and a water receiving plate coupled to the attachment so as to pass through the operation space while being spaced apart from the front surface of the support body and the cover member. The hydroelectric power generation device can maximize power production by simultaneously providing weight and head-drop of water as a power generator driving force, and furthermore installed and used regardless of the place such as a waterway and the like by being compactly formed.

However, in the case of the above configuration, there is a problem such as a high production cost due to the complicated configuration of the device, and since it is necessary to continuously provide a certain amount of water, it is impossible to use it in an area where the amount of water is low or in the dry season.

### [Disclosure]

### [Technical Problem]

Therefore, the present inventor has researched and developed the present invention to solve various problems in the conventional hydroelectric power generation device.

That is, an object of the present invention is to provide an impeller assembly for a hydroelectric power generation device, in which pressure of the flow rate is simultaneously provided to an impeller together with the head-drop energy of the flowing flow, an inlet partition is formed in an inlet formed in a body to enhance the rotational driving force of the impeller, a fluid tank partitioned by a blade and a partition wall is formed in the impeller so that the fluid tank is pressurized in a pressing portion, and the fluid flowing into the fluid tank is moved to an adjacent fluid tank through a lower spacing portion of the blade so that a problem of generating a load in the impeller which may occur when the fluid is subject to the vacuum in a pressing chamber can be solved, thereby maximizing the power generation efficiency.

### [Technical Solution]

In order to achieve the above object, first, the present invention provides an impeller assembly for a hydroelectric power generation device, wherein an impeller is contained in a cylindrical body having a containing space formed therein and sealed by a cover member, a drive shaft is supported by a bearing coupled to the cover member, and the body has an inlet and an outlet formed therein such that the impeller (4) installed in an inner space is driven.

The inlet is configured to be able to supply a fluid, as if an involute curve, from a 12 o'clock direction of the body to a 4 o'clock direction of the body, the outlet is formed from a 6 o'clock direction to a 8 o'clock direction, the impeller has multiple fluid tanks formed to be open toward an inner surface of the body, a pressing portion is formed from the 4 o'clock direction to the 6 o'clock direction between the inlet and the outlet so as to close the fluid tanks, thereby increasing a rotational moment of the impeller.

Second, the inlet forms at least one inlet partition wall inward so that the fluid is evenly distributed and supplied to the fluid tanks formed in the impeller.

Third, an inlet pressing portion is further formed at a distal end of the inlet partition wall to seal some of the fluid tanks formed in the impeller.

Fourth, the impeller is formed with a plurality of blades disposed radially to face an axial direction of the drive shaft in close to an inner surface of the body and the fluid tanks partitioned by a plurality of partition walls disposed perpendicular to the drive shaft.

Fifth, the impeller is formed with a spacing portion that allows the drive shaft to be coupled to a lower end of the partition wall, and allows the drive shaft and the blades to be spaced apart from each other.

Sixth, the blade is configured to have an upper end that is curved in a direction opposite to a rotational direction.

Seventh, the blades are arranged such that the blades having a narrow spacing portion with respect to the drive shaft and the blades having a wide spacing portion with respect to the drive shaft are alternately disposed.

Eighth, a guide piece for guiding the fluid flowing through the spacing portion toward a front end of a neighboring blade is formed on the drive shaft in front of the spacing portion.

Ninth, a guide piece for guiding the fluid flowing through the spacing portion toward a middle portion of a neighboring blade is formed on the drive shaft in front of the spacing portion having a wide width.

Tenth, an inner surface of the body and an outer diameter of the impeller are configured to maintain a tolerance of 0.2 to 0.5 mm to minimize a flow rate loss without rotating friction of the impeller.

Eleventh, the drive shaft of the impeller is coupled through a bearing housing coupled to the cover member, the bearing housing forms a seal coupling hole toward the cover member and a bearing coupling hole opposite to the seal coupling hole about a partition wall in order to install a seal and a bearing, a flow path is horizontally recessed at a lower portion of the seal coupling hole, and a discharge hole is formed on the flow path so that the fluid being leaked through the seal is discharged to an outside.

Twelfth, the pressing portion further includes a pressure adjusting device.

Thirteenth, the pressure adjusting device includes a pressure adjusting hole formed in the pressing portion of the body, an adjusting member fitted into the pressure adjusting hole and having one end coupled to the body by a pin, and an elevating device installed outside the body to elevate the adjusting member.

### [Advantageous Effects]

When using the impeller assembly for the hydroelectric power generation device according to the present invention, the following effects can be obtained.

The inlet allows the fluid to be supplied, as if an involute curve, from the direction of 12 o'clock to the direction of 4 o'clock of the body, and one or more inlet partitions are formed inside the inlet to evenly distribute the fluid to the fluid tank formed in the impeller.

The partitioned fluid tank is formed in the impeller, and in particular, the spacing portion is formed at the lower side of the fluid tank, so that the fluid moved through the spacing portion functions to push the blade, thereby increasing the output efficiency.

A tolerance of 0.2 to 0.5 mm is formed between the inner surface of the body constituting the pressing portion and the tip of the blade, so that the flow rate loss can be minimized without rotational friction of the water wheel.

It is possible to manufacture in a compact structure and small hydroelectric power generation is possible when installed in small rivers or reservoir waterways.

Since the pressure control device is provided, the number of pressing portions can be adjusted according to the amount of fluid flowing into the inlet, thereby solving problems such as excessive rotational force occurring in the impeller assembly.

### [Description of Drawings]

FIG. 1 is a perspective view showing an external appearance of an impeller assembly for a hydroelectric power generation device according to a preferred embodiment of the present invention.
FIG. 2 is an exploded perspective view of FIG. 1.
FIG. 3 is a side sectional view of FIG. 1.
FIG. 4 is a side sectional view of a body applied to the present invention.
FIG. 5 is a side sectional view showing another example of a body applied to the present invention.
FIG. 6 is a side sectional view showing still another example of a body applied to the present invention.
FIG. 7 is a perspective view showing some configurations of an impeller that can be applied to the present invention.
FIG. 8 is a front sectional view of FIG. 7.
FIG. 9 is a side sectional view of FIG. 7.
FIG. 10 is a side sectional view showing another example of an impeller that can be applied to the present invention.
FIGS. 11 and 12 are side sectional views showing still another example of an impeller that can be applied to the present invention.
FIG. 13 is an enlarged sectional view showing an action of a guide piece provided in an impeller applied to the present invention.
FIG. 14 is a sectional view showing the coupling state of a drive shaft and a cover member of an impeller applied to the present invention.
FIG. 15 is a side sectional view showing another example of an impeller assembly for a hydroelectric power generation device according to the present invention.
FIG. 16 is a planar sectional view showing a pressure control device taken from FIG. 15.
FIG. 17 is a side sectional view showing a pressure control device taken from FIG. 15.

### [Best Mode]

### [Mode for Invention]

Hereinafter, preferred embodiments of an impeller assembly for a hydroelectric power generation device provided in the present invention will be described with reference to the accompanying drawings.

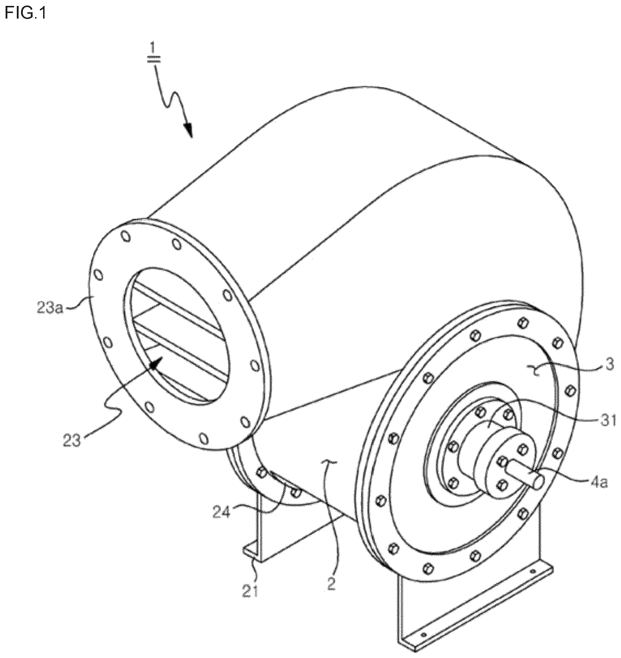

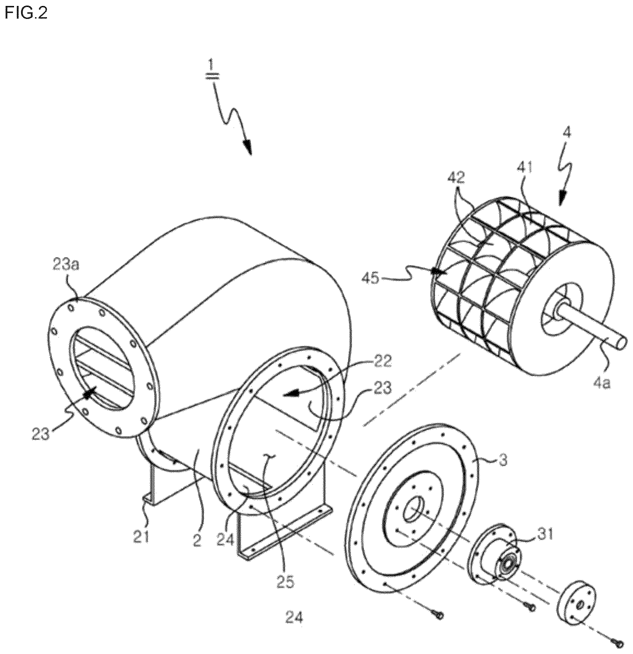

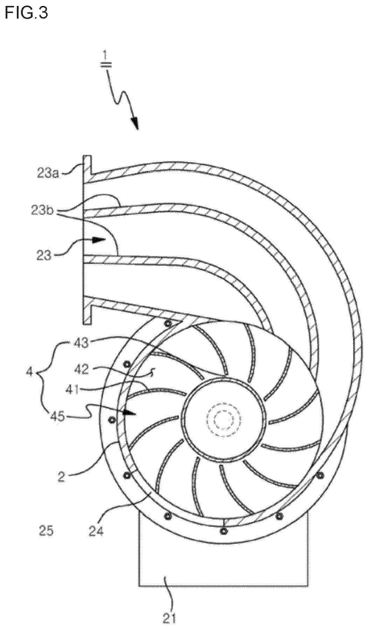

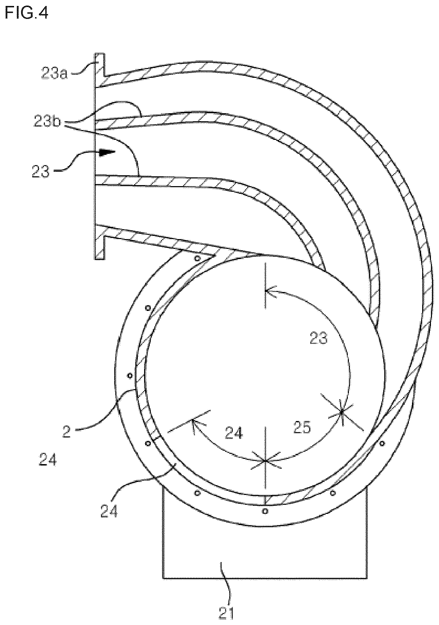

FIG. 1 is a perspective view showing an external appearance of an impeller assembly for a hydroelectric power generation device according to a preferred embodiment of the present invention, FIG. 2 is an exploded perspective view of FIG. 1, FIG. 3 is a side sectional view of FIG. 1, and FIG. 4 is a side sectional view of a body applied to the present invention.

An impeller assembly 1 for a hydroelectric power generation device provided in the present invention allows the pressure (weight) of the flow rate together with the head-drop energy of the incoming flow rate to be provided to an impeller 4 at the same, thereby enhancing the rotational driving force of an impeller 4.

The present invention may include a body 2 provided with a support plate 21, a cover member 3 for sealing an inner space 22 formed in the body 2, and the impeller 4 installed in an inner space 22 in a state in which both ends of the impeller 4 are supported by the cover member 3.

The body 2 is configured in a cylindrical shape, and the open both sides of the body 2 are coupled to be watertight by a fixing device such as a stay bolt so that the inner space 22 can be sealed.

In the body 2, as shown in FIG. 4, an inlet 23 and an outlet 24 are formed in opposite directions, and a pressing portion 25 that is sealed by blades 41 provided in the impeller 4 may be formed between the inlet 23 and the outlet 24 in the flowing direction of the fluid.

The inlet 23 is formed to be located in the direction from 12 o'clock to 4 o'clock, and a flange 23a is integrally formed at an upper portion of the entrance of the inlet 23.

The inlet 23 is formed by coupling a tubular member, which extends to the body 2 from the flange 23a, to the body 2 in the form of involute curve, and at least one inlet partition wall 23b is formed at an inner portion of the inlet 23 so that the fluid can be evenly distributed and supplied to the fluid tanks 45 formed in the impeller 4. According to the present invention, as an example, two inlet partition walls 23b are formed in the horizontal direction such that the fluid can be simultaneously supplied to a plurality of fluid tanks 45 when the impeller 4 rotates clockwise, but the number of the inlet partition walls 23b can be increased as needed.

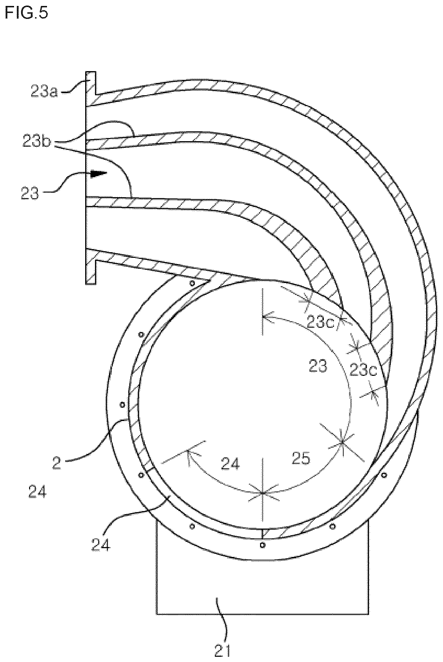

In addition, as shown in FIG. 5, an inlet pressing portion 23c may be further formed at the distal end of the inlet partition wall 23b of the inlet 23 to seal some of the fluid tank 45 formed in the impeller 4. When the inlet pressing portion 23c is formed as described above, the fluid introduced through the inlet 23 flows into the fluid tanks 45 formed in the impeller 4 while being divided by the inlet partition wall 23b. When the fluid passes through the section of the inlet pressing portion 23c, the pressing force is momentarily generated while increasing the rotational force of the impeller 4, thereby providing the effect of increasing the output efficiency.

In addition, the outlet 24 is configured to be located in the direction from 6 o'clock to 8 o'clock, and the pressing portion 25 is formed to have a smaller angle than the inlet 23 between the 4 o'clock and 6 o'clock directions, so that the driving force is generated to rotate the impeller 4 by the fluid pressure.

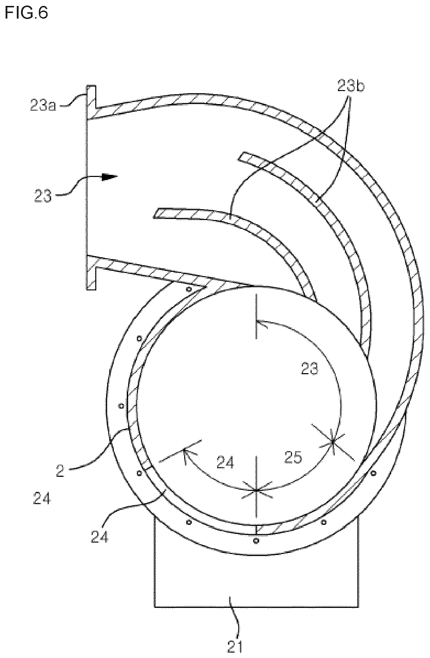

FIG. 6 is a side sectional view showing another example of the body applied to the present invention.

When forming the body as described above, at least one inlet partition wall 23b is formed inside the inlet 23, and the inlet partition walls 23b are located at different distances from the inlet side of the inlet partition wall 23b, thereby facilitating the supply of the fluid being introduced.

Preferably, the length of the inlet partition wall 23b is configured such that the upper portion of the inlet partition wall 23b may be far away from the entrance side. According to the above configuration, when the fluid is introduced into the inlet 23, the fluid is first supplied through the lower space so that a force to drive the impeller 4 is generated, and the fluid supplied through the upper space provides the supplement and pressing functions, thereby improving the rotational force of the impeller 4.

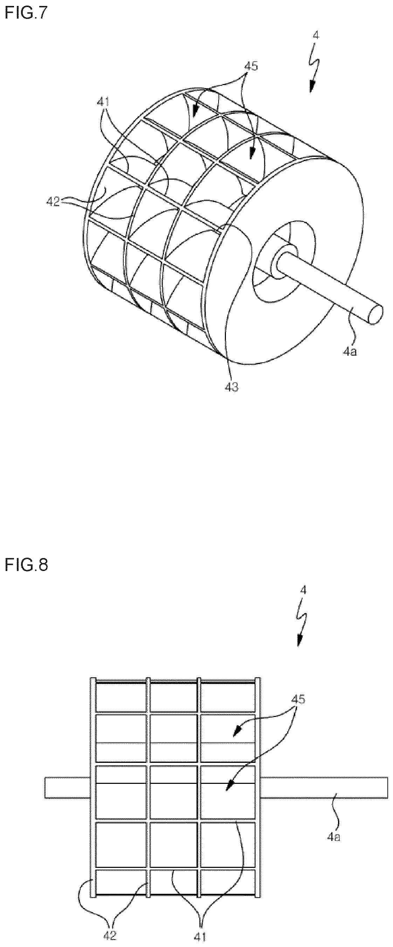

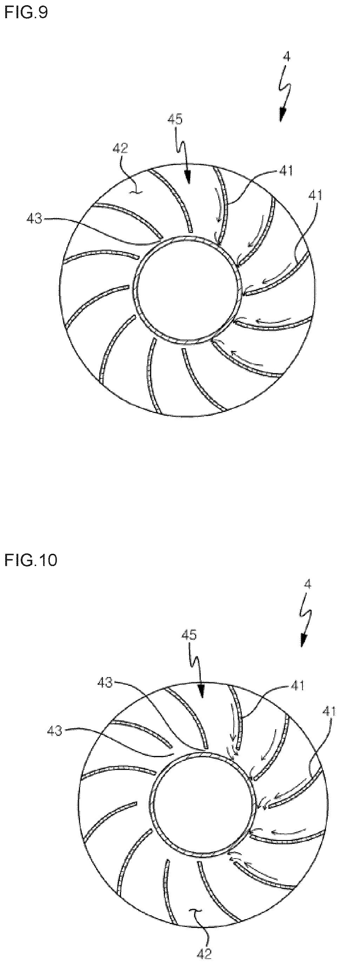

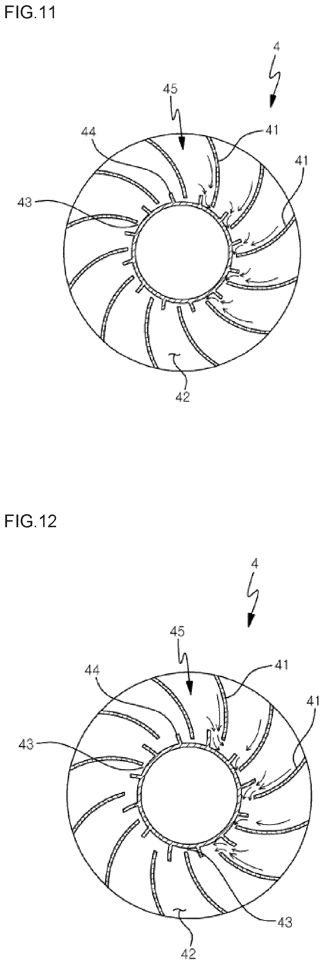

FIG. 7 is a perspective view showing some configurations of an impeller that can be applied to the present invention, FIG. 8 is a front sectional view of FIG. 7, FIG. 9 is a side sectional view of FIG. 7, FIG. 10 is a side sectional view showing another example of an impeller that can be applied to the present invention, and FIGS. 11 and 12 are side sectional views showing still another example of an impeller that can be applied to the present invention.

As mentioned above, the impeller 4 provided in the present invention has a centrally located drive shaft 4a supported by a bearing on the cover member 3 so that it can rotate freely, and a plurality of fluid tanks 45 are opened in the circumferential direction such that the driving shaft 4a can be located in the inner space 22 formed in the body 2.

The impeller 4 is provided with a plurality of blades 41 and a plurality of partition walls 42 on the drive shaft 4a. The blades 41 are radially disposed so as to be positioned in the axial direction of the drive shaft 4a in close to the inner surface of the body 2, and the partition walls 42 are disposed perpendicularly to the drive shaft 4a.

The plurality of partition walls 42 have lower ends coupled to the drive shaft 4a in close contact with the drive shaft 4a, and the blades 41 are separated from the drive shaft 4a by the spacing portion 43 formed between the blades 41 and the drive shaft 4a (see FIG. 9).

The spacing portion 43 may be provided at various heights with respect to the drive shaft 4a depending on the diameter of the impeller 4.

The spacing portions 43 may be configured to have different heights alternately in the circumferential direction as needed, and the blades 41 having the narrow spacing portion 43 and the blades 41 having the wide spacing portion 43 may be alternately disposed such that the fluid flowing into the fluid tank 45 can be discharged to the adjacent fluid tank 45 through the spacing portions 43.

In the case of the spacing portion 43, when the narrow width is 10 mm, the wide width is preferably about 20 mm (see FIG. 10).

In addition, the blade 41 provided in the present invention may have a configuration that is gradually curved in the opposite direction of rotation (counterclockwise in the coupled state) when viewed in a sectional view. Thus, when the fluid introduced into the inlet 23 of the body 2 makes contact with the blades 41, the fluid may be naturally guided toward the lower spacing portion 43.

Meanwhile, a guide piece 44 is further formed on the side of the spacing portion 43 formed at the lower end of the blade 41 constituting the impeller 4. The guide piece 44 generates pressure while passing through a narrow gap of the spacing portion 43 when the fluid descending through the blade 41 is supplied to the adjacent fluid tank 45 through the spacing portion 43 formed at the lower end of the blade 41 and the guide piece 44 induces the pressure to the middle portion of the blade 41 positioned in the rotational direction to provide a function of increasing the rotational force (see FIGS. 11, 12, and 13).

Meanwhile, the guide piece 44 may be uniformly installed in front of each spacing portion 43, or may be installed alternately one by one. In particular, when the spacing portions 43 of different heights are alternately formed, the guide pieces 44 are formed only in front of high spacing portions 43.

In addition, the partition wall 42 having the lower end coupled to the drive shaft 4a is configured in a disc shape and coupled to both ends of the blade 41 to seal the both ends of the blade 41 so that the fluid tanks 45, which are coupled at equal intervals between the partition walls 42 disposed on both sides of the fluid tanks 45 and have outer portions that are opened by the blades 41 and the partition walls 42, can be formed.

In the present invention, a configuration having four partition walls 42 has been proposed, and the number and diameter of the blades 41 and the number of partition walls 42 may be increased or decreased depending on the size of the body 2, etc.

The outer diameter of the impeller 4 may be configured to maintain a tolerance of 0.2 to 0.5 mm with respect to the inner diameter of the body 2 to minimize the flow rate loss without rotational friction of the impeller 4. If the tolerance is less than 0.2-0.5mm with respect to the inner diameter of the body 2, the rotational friction may occur, and when the tolerance is greater than 0.2-0.5mm with respect to the inner diameter of the body 2, the pressing force of the fluid tank 45 located in the pressing portion 25 may be lowered, thereby lowering the rotational force of the impeller 4.

When the impeller 4 is configured as described above, if the lower end is in a closed state when the fluid supplied through the inlet 23 is introduced into to the partitioned narrow fluid tank 45 of the impeller 4, the fluid passing through the pressing portion 25 has no mobility, so a load is generated and the impeller is stopped, however, when the spacing portion 43 is configured as described above, since some of the fluid introduced through the inlet 23 moves toward the fluid tank 45 adjacent in the rotational direction, it is possible to ensure the fluid mobility inside the fluid tank 45 located in the pressing portion 25, thereby preventing the generation of a load so that the smooth rotational force of the impeller 4 can be ensured. In addition, when the sizes of the spacing portions 43 are different from each other, the fluid movement between the fluid tanks 45 is alternately accelerated and slowed and the fluid is mixed with the fluid provided from the inlet 23, so that a driving force of the impeller 4 is generated to increase the output.

That is, the fluid is discharged in the opposite direction of rotation (counterclockwise) through the spacing portion 23, and the discharged fluid is guided toward the upper end of the blade 41 in the opposite direction of rotation through the guide piece 44 and mixed with the fluid introduced through the inlet 23 so that the fluid pushes the blade 41 toward the pressing portion 25 arranged in the rotational direction while hitting the blade 41 of the fluid tank 45 arranged in the rotational direction, thereby generating the rotational force.

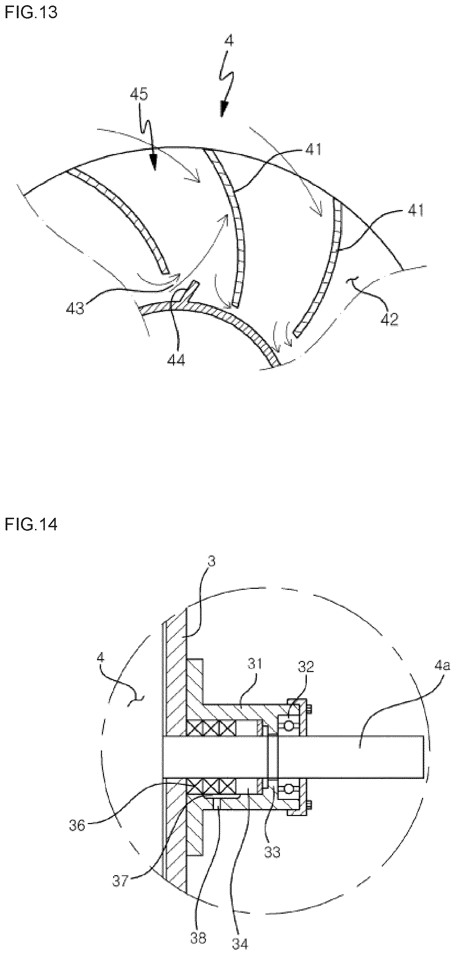

FIG. 14 is a sectional view showing the coupling state of the drive shaft and the cover member of the impeller applied to the present invention.

The drive shaft 4a of the impeller 4 applied to the impeller assembly 1 for the hydroelectric power generation device is provided while being supported by a bearing on the cover member (3) coupled to both sides of the body.

As shown in the drawing, the drive shaft 4a is coupled through the bearing housing 31 coupled to the cover member 3, and prevents the fluid from leaking toward the bearing 32, thereby preventing the failures related to the bearing 32.

That is, in the case of the bearing housing 31, the seal coupling hole 34 is formed toward the cover member 3 and the bearing coupling hole 35 is formed on the opposite side about the partition wall 33 such that the seal 36 and the bearing 32 can be installed, the flow path 37 is horizontally recessed in the lower portion of the seal coupling hole 34, the discharge hole 38 is formed on the flow path 37 to discharge the fluid being leaked through the seal 36 to the outside, and the fluid blocking ring 39 is coupled to the inside of the seal coupling hole 34 in close to the partition wall 33, thereby preventing the fluid from flowing back toward the bearing coupling hole 35.

According to the above configuration, even if the fluid leaks through the seal 36 coupled to the drive shaft 4a, the fluid can be discharged to the outside through the flow path 37 and the discharge hole 28 formed in the seal coupling hole 34, so it is possible to eliminate problems such as the corrosion of the bearing 32 by the fluid.

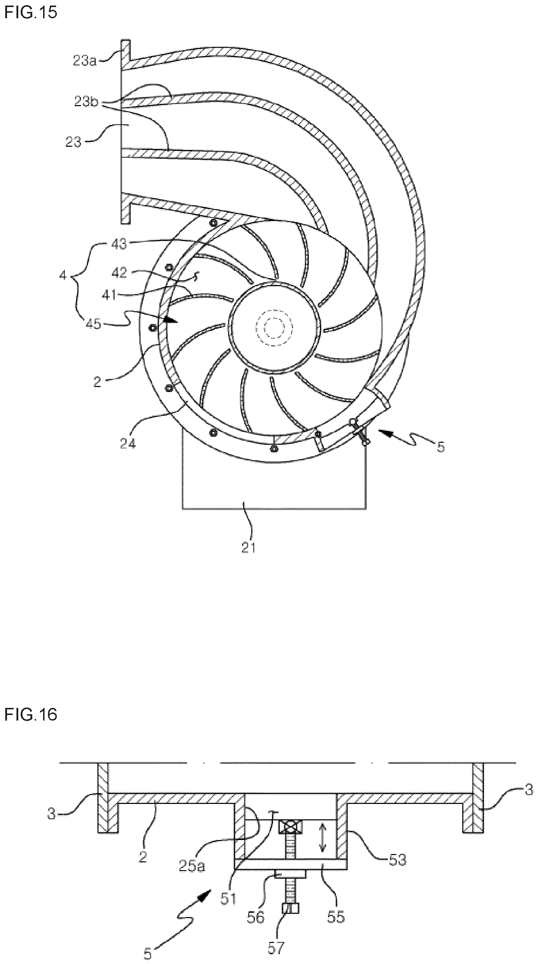

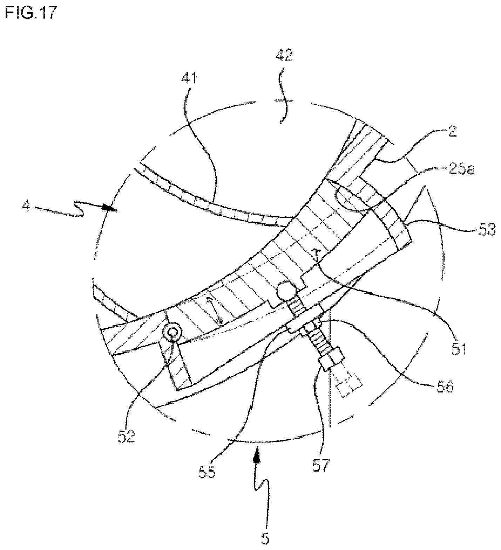

FIG. 15 is a side sectional view showing another example of an impeller assembly for a hydroelectric power generation device according to the present invention, FIG. 16 is a planar sectional view showing a pressure control device taken from FIG. 15, and FIG. 17 is a side sectional view showing a pressure control device taken from FIG. 15.

This configuration further includes a pressure adjusting device 5 in the pressing portion 25 when configuring the impeller assembly 1 for the hydroelectric power generation device as described above.

When the pressure adjusting device 5 is installed in the pressing portion 25 as described above, the effect of providing uniform output can be obtained by arbitrarily adjusting the pressure or the inflow amount of the fluid introduced through the inlet 23.

According to the configuration of the pressure control device 5 provided in the present invention, a pressure adjustment hole 25a is formed through the inside and outside of the pressing portion 25 of the body 2, and an adjusting member 51 is fitted in the pressure adjustment hole 25a.

In this case, the adjusting member 51 can be rotated by coupling the outlet 24 to the body 2 using the pin 52.

The pressure adjustment hole 25a has a shape that is expanded by a guide portion 53 coupled to an outside of the body 2, and the adjusting member 51 is operated inside the guide portion 53.

One end of the adjusting member 51 coupled to the body 2 by the pin 52 so that the adjusting member 51 can be arbitrarily rotated around the pin 52 by an elevating device 54.

The elevating device 54 is coupled to a support 55, which is horizontally arranged on the guide portion 53, by a nut 56, and an adjusting bolt 57 having a front end rotatably coupled to the adjusting member 51 is screw-coupled into the nut 56, so that the adjusting member 51 can be elevated.

In the case of providing the pressure adjusting device 5 as described above, as shown in FIG. 11, some of the fluid tanks 45 formed in the impeller 4 can be opened in the pressing portion 25.

That is, when excessive fluid is introduced through the inlet 23 or is introduced with excessive pressure, an overload may occur in the impeller 4. In this case, it is possible to maintain a constant operating efficiency of the impeller assembly 1 by reducing the output by controlling the amount of water in the fluid tank 45 located in the pressing portion 25 by adjusting the pressure adjusting device 5.

Although specific embodiments have been described In the detailed description of the present invention, various modifications are possible without departing from the scope of the present invention. Therefore, the protection scope of the present invention may not be limited to the described embodiments, and may be defined by the claims described below as well as equivalents thereof.

## Claims

1. An impeller assembly (1) for a hydroelectric power generation device, wherein an impeller (4) is contained in a cylindrical body (2) having a containing space formed therein and sealed by a cover member (3), a drive shaft (4a) is supported by a bearing coupled to the cover member (3), and the body (2) has an inlet (23) and an outlet (24) formed therein such that the impeller (4) installed in an inner space (22) is driven, and wherein the inlet (23) is configured to be able to supply a fluid, as if an involute curve, from a 12 o'clock direction of the body to a 4 o'clock direction of the body, the outlet (24) is formed from a 6 o'clock direction to a 8 o'clock direction, the impeller (4) has multiple fluid tanks (45) formed to be open toward an inner surface of the body (2), a pressing portion (25) is formed from the 4 o'clock direction to the 6 o'clock direction between the inlet (23) and the outlet (24) so as to close the fluid tanks (45), thereby increasing a rotational moment of the impeller (4).

2. The impeller assembly of claim 1, wherein the inlet (23) forms at least one inlet partition wall (23b) inward so that the fluid is evenly distributed and supplied to the fluid tanks (45) formed in the impeller (4).

3. The impeller assembly of claim 2, wherein an inlet pressing portion (23c) is further formed at a distal end of the inlet partition wall (23b) to seal some of the fluid tanks (45) formed in the impeller (4).

4. The impeller assembly of claim 1, wherein the impeller (4) is formed with a plurality of blades (41) disposed radially to face an axial direction of the drive shaft (4a) in close to an inner surface of the body (2) and the fluid tanks (45) partitioned by a plurality of partition walls (42) disposed perpendicular to the drive shaft (4a).

5. The impeller assembly of claim 4, wherein the impeller (4) is formed with a spacing portion (43) that allows the drive shaft (4a) to be coupled to a lower end of the partition wall (42), and allows the drive shaft (4a) and the blades (41) to be spaced apart from each other.

6. The impeller assembly of claim 4, wherein the blade (41) is configured to have an upper end that is curved in a direction opposite to a rotational direction.

7. The impeller assembly of claim 5, wherein the blades (41) are arranged such that the blades (41) having a narrow spacing portion (43) with respect to the drive shaft (4a) and the blades (41) having a wide spacing portion (43) with respect to the drive shaft (4a) are alternately disposed.

8. The impeller assembly of claim 5, wherein a guide piece (44) for guiding the fluid flowing through the spacing portion (43) toward a front end of a neighboring blade (41) is formed on the drive shaft (4a) in front of the spacing portion (43).

9. The impeller assembly of claim 8, wherein a guide piece (44) for guiding the fluid flowing through the spacing portion (43) toward a middle portion of a neighboring blade (41) is formed on the drive shaft (4a) in front of the spacing portion (43) having a wide width.

10. The impeller assembly of claim 1, wherein an inner surface of the body (2) and an outer diameter of the impeller (4) are configured to maintain a tolerance of 0.2 to 0.5 mm to minimize a flow rate loss without rotating friction of the impeller (4).

11. The impeller assembly of claim 1, wherein the drive shaft (4a) of the impeller (4) is coupled through a bearing housing (31) coupled to the cover member (3), the bearing housing (31) forms a seal coupling hole (34) toward the cover member (3) and a bearing coupling hole (35) opposite to the seal coupling hole (34) about a partition wall (33) in order to install a seal (36) and a bearing (32), a flow path (37) is horizontally recessed at a lower portion of the seal coupling hole (34), and a discharge hole (38) is formed on the flow path (37) so that the fluid being leaked through the seal (36) is discharged to an outside.

12. The impeller assembly of claim 1, wherein the pressing portion (25) further includes a pressure adjusting device (5).

13. The impeller assembly of claim 9, wherein the pressure adjusting device (5) includes a pressure adjusting hole (25a) formed in the pressing portion (25) of the body (2), an adjusting member (51) fitted into the pressure adjusting hole (25a) and having one end coupled to the body (2) by a pin (52), and an elevating device (54) installed outside the body (2) to elevate the adjusting member (51).
